# FASCICULE DE BREVET EUROPEEN

(11) **EP 0 884 206 B1**
(45) Date de publication et mention de la délivrance du brevet: **26.02.2003**
(21) Numéro de dépôt: 98401404.3
(22) Date de dépôt: 10.06.1998
(51) Int. Cl.: B60J 1/17, F16C 29/02

(54) **Procédé d'amélioration des qualités de coulissement d'un chariot sur un rail et dispositif de mise en oeuvre du procédé**
Verfahren zur Verbesserung der Gleiteigenschaften eines Schlittens auf einer Schiene und Vorrichtung zur Durchführung des Verfahrens
Method for improving the sliding qualities of a carriage on a rail and device to realise this method

(30) Priorité: 13.06.1997 FR 9707325
(43) Date de publication de la demande: 16.12.1998
(73) Titulaire: MECAPLAST SAM, MC-98000 Monaco (MC)
(72) Inventeur: Morando, Patrick, 06800 Cagnes sur Mer (FR)
(74) Mandataire: Debay, Yves

(56) Documents cités:
- EP-A- 0 409 095
- DE-A- 3 743 086
- DE-C- 3 616 537
- FR-A- 1 304 809
- FR-A- 2 286 974
- FR-A- 2 320 459
- FR-A- 2 575 214
- GB-A- 838 862
- GB-A- 884 645

## Description

La présente invention concerne un procédé pour l'amélioration du coulissement d'un curseur ou chariot sur un rail, selon le préambule de la revendication n°1, ainsi qu'un dispositif de mise en oeuvre du procédé. Un procédé de ce type est déjà révélé dans le document DE 3743086 A.

L'invention peut s'appliquer notamment pour améliorer les qualités de coulissement d'un chariot support de vitre sur un rail d'une "cassette" de porte de véhicule telle que celle décrite dans la demande de brevet français déposée par la requérante le 24 janvier 1997 et ayant le numéro d'enregistrement national n° 97 00790.

Les rails de coulissement des chariots supports de vitres de cassettes de portes de véhicules peuvent se dilater sous l'effet notamment de variations thermiques. La déformation des rails est contrariée par les vis de fixation des rails dans la coquille de la porte du véhicule, ces vis de fixation étant situées généralement aux deux extrémités des rails. Ainsi, en se déformant, le rail peut former sur sa longueur des irrégularités, en particulier aux endroits contrariés par les vis. Il en résulte que le rail peut perdre sa courbure régulière ce qui peut entraîner des dysfonctionnements du mécanisme lève-vitre, en particulier des blocages des chariots supports de vitre. De plus, on est obligé de constituer le rail en un matériau plastique ayant de bonnes propriétés de résistance mécanique aux efforts et contraintes, une bonne résistance à l'usure due aux coulissements des patins et un bon coefficient de frottement entre le matériau constituant le rail et celui constituant le patin. Tout ceci oblige l'utilisateur à mouler son rail avec un matériau plastique bien spécifique qui est onéreux.

Un premier but de l'invention est de proposer un procédé d'amélioration des qualités de coulissement d'un curseur ou chariot sur au moins un rail notamment en cas de déformations du rail dues aux variations thermiques, palliant les inconvénients de l'art antérieur.

Ce but est atteint par le fait que pour améliorer le coulissement d'un curseur ou chariot sur au moins un rail, le chariot portant une pièce destinée à être déplacée le long du rail, le procédé comporte une étape de disposition, sur la surface du rail sur laquelle se déplace le chariot, d'un profilé de forme complémentaire de la forme du rail, le profilé épousant sensiblement la forme du rail et assurant le lissage des irrégularités ou déformations du rail dues notamment aux dilatations thermiques de ce dernier.

Selon une autre particularité le profilé est enfilé sur le rail selon une direction parallèle à la direction du rail.

Selon une autre particularité le profilé est clipsé sur le rail selon une direction perpendiculaire à la direction du rail.

Selon une autre particularité le profilé est rendu solidaire du rail de manière amovible à proximité de l'une de ses extrémités, permettant une dilatation longitudinale du profilé le long du rail sans affecter la forme ou la courbure éventuelle du profilé.

Un second but de l'invention est de proposer un dispositif de mise en oeuvre de procédé de l'invention.

Ce but est atteint par le fait que le dispositif de coulissement d'un chariot sur au moins un rail est constitué d'un profilé fixé sur la surface du rail sur laquelle se déplace le chariot, le profilé ayant une forme complémentaire de la forme du rail et épousant sensiblement la forme de ce dernier.

Selon une autre particularité le profilé est rendu solidaire du rail de manière amovible, à proximité de l'une au moins de ses extrémités.

Selon une autre particularité le profilé est constitué de matière plastique.

Selon une autre particularité un profilé est disposé sur le ou les rails d'une cassette lève-vitre de porte de véhicule.

Selon une autre particularité un profilé est disposé sur le ou les rails d'un système lève-vitre de porte de véhicule.

Selon une autre particularité le profilé a un coefficient de frottement inférieur au coefficient de frottement du rail permettant de diminuer les efforts à appliquer au chariot pour faire déplacer ce demier le long du rail.

Selon une autre particularité le profilé est constitué d'acétal.

Selon une autre particularité le rail est constitué de polypropylène.

D'autres particularités et avantages de la présente invention apparaîtront plus clairement à la lecture de la description ci-après faite en référence aux dessins annexés dans lesquels :
- la figure 1 représente une vue en perspective simplifiée d'une cassette de porte de véhicule constituant un exemple d'application du procédé d'amélioration des qualités de coulissement d'un chariot sur un rail selon l'invention,
- la figure 2A représente une vue en perspective et schématique d'un rail de coulissement de la cassette de la figure 1, sur lequel est disposé un profilé selon l'invention, améliorant les qualités de coulissement d'un chariot,
- la figure 2B représente schématiquement en coupe transversale le rail de coulissement de la figure 2A pourvu d'un profilé selon l'invention et sur lequel coulisse un chariot.

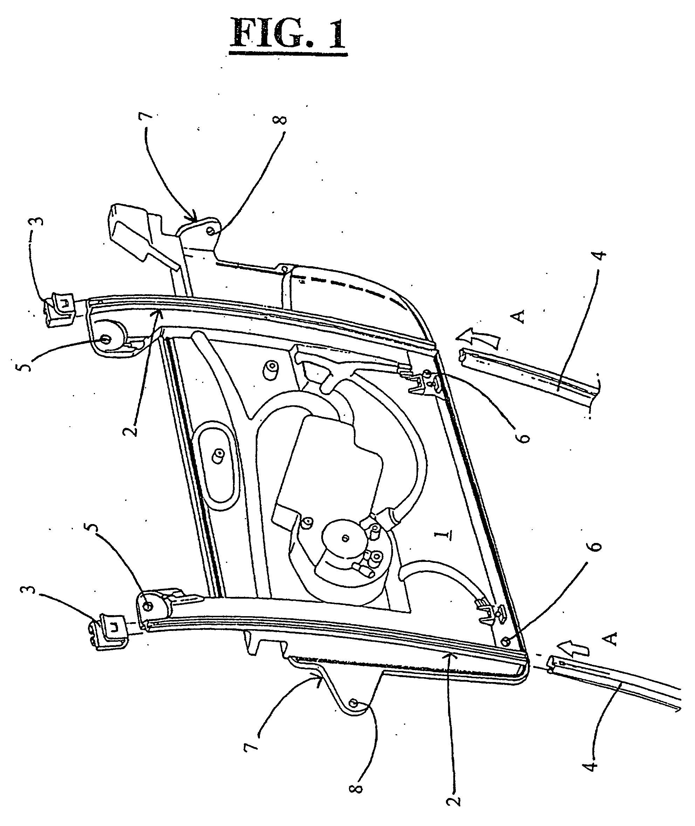

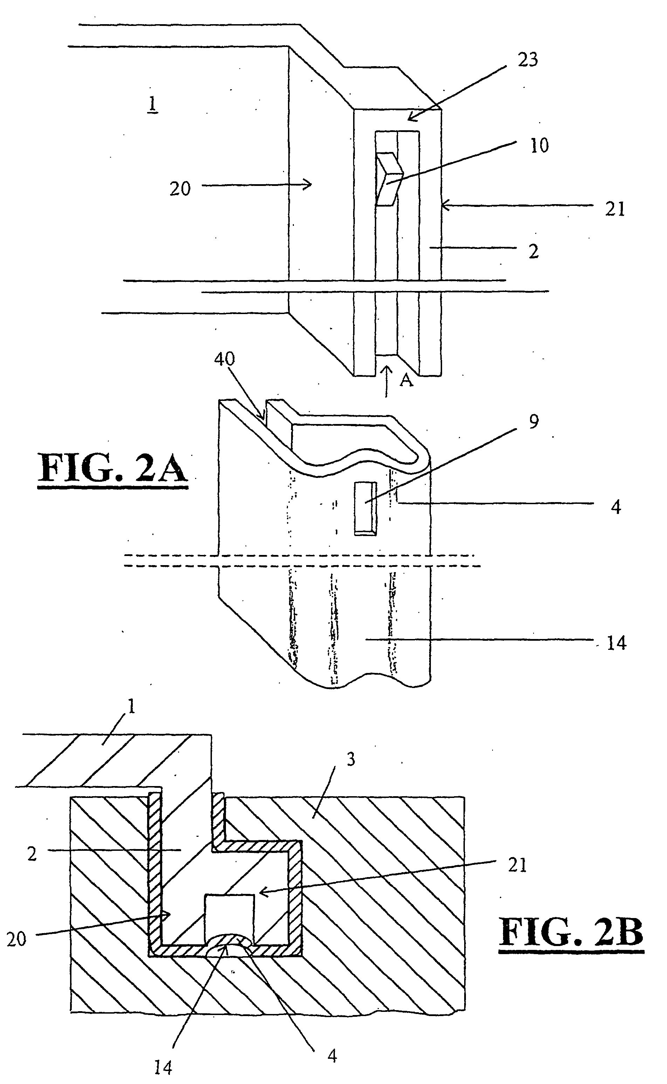

L'invention va à présent être décrite en référence aux figures 1, 2A et 2B. Dans l'exemple de réalisation nullement limitatif décrit ci-après, l'invention est appliquée au coulissement des curseurs ou chariots (3) constituant, par exemple, des supports de vitre d'une cassette (1) de porte de véhicule. La cassette (1) de la figure 1 est constituée d'un panneau sensiblement rectangulaire constitué, par exemple, de matière plastique moulée. La cassette (1) comporte, sur l'une de ses faces, deux rails (2) verticaux faisant chacun saillie au-delà du bord supérieur de la cassette (1). Sur chacun des deux rails (2) coulisse un chariot (3) support de vitre adapté au profil du rail (2). Les rails (2) peuvent être moulés d'un bloc avec la cassette (1) ou rapportés sur cette dernière par tout moyen approprié. Dans ce dernier cas, le matériau utilisé pour constituer les rails peut être un métal ou une matière plastique telle que, par exemple, du polypropylène. Les rails (2) peuvent être convexes vers l'extérieur de la cassette (1). Dans le cas où l'extrémité supérieure des rails (2) pénètre dans le caisson formant le cadre de porte, un perçage (5) est ménagé à proximité de l'extrémité supérieure de chacun des rails (2) pour la fixation respectivement de deux poulies supérieures (non représentées) du mécanisme d'entraînement des chariots (3). De la même façon, la cassette (1) comporte, à proximité de l'extrémité inférieure de chaque rail (2), un perçage (6) prévu pour la fixation d'une poulie inférieure du mécanisme d'entraînement des chariots (3). Sur chacun de ses bords latéraux verticaux, la cassette (1) peut comporter au moins une patte (7) pourvue d'un perçage (8) prévu pour la fixation de la cassette (1) dans le caisson ou coquille constituant la porte du véhicule. Les parties supérieure et inférieure des rails (2) peuvent être pourvues également de perçages prévus pour la fixation de la cassette (1) dans la porte du véhicule. Selon l'invention, pour améliorer les qualités de coulissement de chaque chariot (3) sur son rail (2), on dispose sur la surface du rail (2) sur laquelle se déplace le chariot (3) un profilé (4) de forme complémentaire de la forme du rail (2) et recouvrant le rail (2) sur toutes les parties qui sont situées en vis-à-vis du chariot (3). En section transversale, les rails (2) peuvent avoir la forme d'un L, d'un T d'un Y, d'un U, d'un Z ou toute autre forme. Dans l'exemple non limitatif des figures 1, 2A et 2B, le rail (2) a une section ayant sensiblement la forme d'un h minuscule. La branche (20) du h qui constitue un pied et la partie supérieure du h est solidaire de la cassette (1) par une de ses deux extrémités. Le second (20) pied du h constitué par le rail (2) est formé par une portion ayant sensiblement la forme d'un L à l'envers. Le chariot (3) comporte une rainure ayant sensiblement la forme d'un L et destinée à accueillir le rail (2) en h. C'est à dire que le chariot (3) n'occupe pas l'espace situé entre les deux pieds du h formé par le rail (2). Le profilé (4) a en section transverse une forme qui épouse sensiblement le contour du h formé par le rail (2). Cependant, le profilé (4) n'épouse pas forcément la surface du rail (2) qui est située entre les deux pieds du h. Le profilé (4) peut être concave vers l'espace situé entre les deux pieds du h formé par le rail (2), sans pour autant épouser cette surface située entre les deux pieds du h. La section transverse du profilé (4) comporte une ouverture (40, figure 2A) prévue pour la partie supérieure du h formé par le rail (2). Le profilé (4) peut avoir une longueur sensiblement égale à la longueur du rail (2). De manière avantageuse, le profilé (4) peut être fixé de manière amovible sur le rail (2). Par exemple, le profilé (4) peut être enfilé sur le rail (2) selon une direction parallèle à la direction du rail (2) et rendu solidaire du rail (2) à proximité, par exemple, de l'une de ses extrémités. Le profilé (4) épouse sensiblement la forme du rail (2) et du fait qu'il constitue une pièce rapportée sur le rail (2), le profilé (4) assure un lissage des irrégularités et/ou déformations du rail (2) dues notamment à la fabrication ou aux dilatations thermiques de ce dernier. Par exemple, le profilé peut être enfilé manuellement par un opérateur par le bas du rail (2), selon la direction (A) représentée aux figures 1 et 2A. Le profilé (4) peut être rendu solidaire du rail (2) à proximité de l'une de ses extrémités par clipsage. Tout autre moyen de liaison du profilé (4) sur le rail (2) est également envisagé. Par exemple, l'une des extrémités du profilé (4) peut comporter au moins un orifice ou creux (9) destiné à coopérer par clipsage avec au moins un ergot (10) complémentaire formé sur une extrémité du rail (2) concerné. De manière préférée mais non limitative, l'ergot (10) est formé, par exemple, sur la surface qui est située entre les deux pieds du h constitué par le rail (2) et qui est perpendiculaire à ces deux pieds. L'orifice ou évidement (9) complémentaire est situé quant à lui sur la partie (14) concave du profilé (4). De manière avantageuse, l'ergot (10) forme une saillie suffisamment grande pour pouvoir s'engager dans l'orifice du profilé (4), sans pour autant faire saillie par rapport aux deux pieds du h formé par le rail (2). Ainsi, l'ergot (10) ne gêne pas la translation du rail (2). De préférence également, le clipsage du profilé (4) sur le rail (2) est situé au niveau de l'extrémité du rail (2). Ainsi, par exemple, l'ergot (10) de clipsage du profilé (4) sur le rail (2) peut être situé au-delà de la position extrême de butée du chariot (3) sur l'extrémité du rail (2). L'ergot (10) peut, par exemple, former une saillie de hauteur croissante dans la direction (A) selon laquelle le profilé (4) est enfilé. Avantageusement, le rail (2) peut être pourvu de moyens formant une butée (23) pour le profilé (4), limitant la translation du profilé (4) sur le rail (2) selon la direction A. Ces moyens formant une butée (23) sont prévus pou bloquer la translation du profilé (4) le long du rail (2) dans la direction (A) lorsque le profilé (4) est correctement positionné sur le rail (2), c'est à dire quand l'ergot (10) du rail (2) vient se clipser dans l'évidement (9) du profilé (4). Ces moyens formant une butée (23) empêchent ainsi le glissement du profilé (4) au-delà de l'extrémité du rail (2), par exemple en fin d'enfilage du profilé (4) sur le rail (2). Ces moyens formant une butée (23) pour le profilé (4) peuvent être constitués, par exemple, d'un lien de matière (23) entre les deux pieds (20, 21) du h formé par le rail (2), à l'extrémité du rail (2) qui est adjacente à l'ergot (10). De cette façon, l'extrémité de la partie (14) concave du profilé (4) qui est adjacente à l'ergot (10) vient coopérer en butée contre le lien de matière (23) entre les deux pieds (20, 21) du h formé par le rail (2).

Bien sûr, l'invention n'est pas limitée à cet exemple de réalisation. Ainsi l'une des extrémités du profilé (4) peut comporter au moins un ergot destiné à coopérer par clipsage avec au moins un creux complémentaire formé sur une extrémité du rail (2) concerné. De la même façon, le profilé (4) peut avoir une flexibilité suffisante pour pouvoir être monté sur le rail (2) par un opérateur selon une direction perpendiculaire à la direction du rail (2). Le profilé (4) étant rendu solidaire du rail (2) par une seule de ses extrémités, le profilé (4) va pouvoir se dilater longitudinalement en direction de son extrémité libre sans pour autant modifier son galbe, le galbe du profilé (4) étant déterminé par le galbe du rail (2). Par exemple, sous l'effet d'une augmentation de sa température, le profilé (4) peut se dilater longitudinalement de plusieurs millimètres sans perturber le fonctionnement du lève-vitre par déformation du rail (2). Le profilé (4) peut être constitué, par exemple, de matière plastique extrudée. Dans une forme de réalisation préférée nullement limitative, le profilé (4) peut être constitué d'acétal qui est matériau facilement extrudable, ayant de bonnes propriétés de glissement et un faible coût. Le chariot (3) support de vitre peut également être constitué d'acétal. Dans une forme de réalisation préférée, non limitative, le profilé (4) peut avoir une épaisseur de l'ordre de 0,8 à 1 mm environ. De même, le jeu de coulissement entre le profilé (4) et le chariot (3) qui coulisse sur ce dernier peut être, par exemple, de l'ordre de 0,05 à 0,15 mm. De la même manière, le profilé (4) peut avoir un coefficient de frottement inférieur au coefficient de frottement du rail (2) permettant de diminuer les efforts à appliquer au chariot (3) pour faire déplacer ce dernier le long du rail (2).

On conçoit aisément que l'on a réalisé un dispositif d'amélioration des qualités de coulissement d'un chariot sur un rail bon marché, simple à fabriquer et à appliquer. Par ailleurs, le profilé (4) protège le rail (2) de la cassette (1) des efforts de frottements générés par le chariot (3) et peut être remplacé très facilement en cas d'usure.

Dans l'exemple de réalisation décrit ci-dessus, l'invention est appliquée au coulissement des chariots sur les rails d'une cassette de porte de véhicule. Cependant, l'invention peut également s'appliquer au coulissement des chariots sur les rails d'un système lève-vitre de porte de véhicule ou à tout autre système dans lequel un curseur ou chariot coulisse sur un rail.

D'autres modifications à la portée de l'homme de métier font également partie du domaine de l'invention. Ainsi, le profilé (4) peut être injecté sans pour autant changer le domaine de l'invention.

## Revendications

1. Procédé pour l'amélioration du coulissement d'un curseur ou chariot sur au moins un rail, le chariot (3) portant une pièce destinée à être déplacée le long du rail (2), **caractérisé en ce qu'**il comporte une étape de disposition, sur la surface du rail (2) sur laquelle se déplace le chariot (3), d'un profilé (4) de forme complémentaire de la forme du rail (2), le profilé (4) épousant sensiblement la forme du rail (2) et étant rendu solidaire du rail (2), et le profilé assurant le lissage des irrégularités ou déformations du rail (2) dues notamment aux dilatations thermiques de ce dernier.

2. Procédé pour le coulissement d'un chariot sur au moins un rail selon la revendication 1, **caractérisé en ce que** le profilé (4) est enfilé sur le rail (2) selon une direction parallèle à la direction du rail (2).

3. Procédé pour le coulissement d'un chariot sur au moins un rail selon la revendication 1 ou 2, **caractérisé en ce que** le profilé (4) est clipsé sur le rail (2) selon une direction perpendiculaire à la direction du rail (2).

4. Procédé pour le coulissement d'un chariot sur au moins un rail selon l'une quelconque des revendications 1 à 3, **caractérisé en ce que** le profilé (4) est rendu solidaire du rail (2) de manière amovible à proximité de l'une de ses extrémités, permettant une dilatation longitudinale du profilé (4) le long du rail (2) sans affecter la forme ou la courbure éventuelle du profilé (4).

5. Dispositif de coulissement d'un chariot (3) sur au moins un rail (2), mis en oeuvre par le procédé selon l'une quelconque des revendications précédentes, **caractérisé en ce qu'**il est constitué d'un profilé (4) fixé sur la surface du rail (2) sur laquelle se déplace le chariot (3), le profilé (4) ayant une forme complémentaire de la forme du rail (2) et épousant sensiblement la forme de ce dernier.

6. Dispositif de coulissement d'un chariot sur au moins un rail selon la revendication 5, **caractérisé en ce que** le profilé (4) est rendu solidaire du rail (2) de manière amovible, à proximité de l'une au moins de ses extrémités.

7. Dispositif de coulissement d'un chariot sur au moins un rail selon la revendication 5 ou 6, **caractérisé en ce que** le profilé (4) est enfilé sur le rail (2) selon une direction parallèle à la direction du rail (2).

8. Dispositif de coulissement d'un chariot sur au moins un rail selon l'une quelconque des revendications 5 à 7, **caractérisé en ce que** le profilé (4) est constitué de matière plastique.

9. Dispositif de coulissement d'un chariot sur au moins un rail selon l'une quelconque des revendications 5 à 8, **caractérisé en ce qu'**un profilé (4) est disposé sur le ou les rails (2) d'une cassette (1) lève-vitre de porte de véhicule.

10. Dispositif de coulissement d'un chariot sur au moins un rail selon l'une quelconque des revendications 5 à 8, **caractérisé en ce qu'**un profilé (4) est disposé sur le ou les rails (2) d'un système lève-vitre de porte de véhicule.

11. Dispositif de coulissement d'un chariot sur au moins un rail selon l'une quelconque des revendications 5 à 10, **caractérisé en ce que** le profilé (4) a un coefficient de frottement inférieur au coefficient de frottement du rail (2) permettant de diminuer les efforts à appliquer au chariot (3) pour faire déplacer ce dernier le long du rail (2).

12. Dispositif de coulissement d'un chariot sur au moins un rail selon l'une quelconque des revendications 5 à 11, **caractérisé en ce que** le profilé (4) est constitué d'acétal.

13. Dispositif de coulissement d'un chariot sur au moins un rail selon l'une quelconque des revendications 5 à 11, **caractérisé en ce que** le rail (2) est constitué de polypropylène.

## Patentansprüche

1. Verfahren zur Verbesserung der Gleiteigenschaften eines Schlittens auf mindestens einer Schiene, wobei der Schlitten (3) ein Teil trägt, das dazu bestimmt ist, entlang der Schiene (2) verfahren zu werden, **dadurch gekennzeichnet, dass** es einen Schritt zur Anordnung eines Profils (4) auf der Oberfläche der Schiene (2) umfasst, auf welcher der Schlitten (3) verfahren wird, wobei das Profil eine zur Form der Schiene (2) komplementäre Form aufweist und wobei das Profil (4) sich im wesentlichen an die Form der Schiene (2) anschmiegt und dabei fest mit der Schiene (2) verbunden wird und wobei das Profil die Glättung von Unregelmäßigkeiten oder Verformungen der Schiene (2) sicherstellt, die insbesondere auf Wärmeausdehnungen der Schiene zurückzuführen sind.

2. Verfahren zur Verbesserung der Gleiteigenschaften eines Schlittens auf mindestens einer Schiene nach Anspruch 1, **dadurch gekennzeichnet, dass** das Profil (4) auf die Schiene (2) in einer zur Ausrichtung der Schiene (2) parallelen Richtung aufgeschoben wird.

3. Verfahren zur Verbesserung der Gleiteigenschaften eines Schlittens auf mindestens einer Schiene nach Anspruch 1 oder 2, **dadurch gekennzeichnet, dass** das Profil (4) in einer zur Ausrichtung der Schiene (2) senkrechten Richtung auf die Schiene (2) aufgesteckt wird.

4. Verfahren Verbesserung der Gleiteigenschaften eines Schlittens auf mindestens einer Schiene nach einem der Ansprüche 1 bis 3, **dadurch gekennzeichnet, dass** das Profil (4) fest mit der Schiene (2) abnehmbar in der Nähe von einem von deren Enden verbunden wird, wobei eine Ausdehnung des Profils (4) in Längsrichtung entlang der Schiene (2) möglich ist, ohne dass dadurch die gegebenenfalls vorhandene Form oder Krümmung des Profils (4) beeinträchtigt wird.

5. Vorrichtung zum gleitenden Verfahren eines Schlittens auf mindestens einer Schiene nach Anspruch 5, **dadurch gekennzeichnet, dass** sie aus einem Profil (4) besteht, die auf der Oberfläche der Schiene (2) angebracht ist, auf welcher der Schlitten (3) verfahrbar ist, wobei das Profil eine zur Form der Schiene (2) komplementäre Form aufweist und sich im wesentlichen an die Form der Schiene (2) anschmiegt

6. Vorrichtung zum gleitenden Verfahren eines Schlittens auf mindestens einer Schiene, die unter Durchführung des Verfahrens nach einem der vorhergehenden Ansprüche betrieben wird, **dadurch gekennzeichnet, dass** das Profil (4) fest mit der Schiene (2) abnehmbar in der Nähe von mindestens einem von deren Enden verbunden ist.

7. Vorrichtung zum gleitenden Verfahren eines Schlittens auf mindestens einer Schiene nach Anspruch 5 oder 6, **dadurch gekennzeichnet, dass** das Profil (4) auf die Schiene (2) in einer zur Ausrichtung der Schiene (2) parallelen Richtung aufgeschoben ist.

8. Vorrichtung zum gleitenden Verfahren eines Schlittens auf mindestens einer Schiene nach einem der Ansprüche 5 bis 7, **dadurch gekennzeichnet, dass** das Profil (4) aus Kunststoff besteht.

9. Vorrichtung zum gleitenden Verfahren eines Schlittens auf mindestens einer Schiene nach einem der Ansprüche 5 bis 8, **dadurch gekennzeichnet, dass** ein Profil (4) auf der Schiene bzw. den Schienen (2) eines Fensterhebe-Moduls für eine Fahrzeugtür angeordnet ist.

10. Vorrichtung zum gleitenden Verfahren eines Schlittens auf mindestens einer Schiene nach einem der Ansprüche 5 bis 8, **dadurch gekennzeichnet, dass** ein Profil (4) auf der Schiene bzw. den Schienen (2) eines Fensterhebesystems für eine Fahrzeugtür angeordnet ist.

11. Vorrichtung zum gleitenden Verfahren eines Schlittens auf mindestens einer Schiene nach einem der Ansprüche 5 bis 10, **dadurch gekennzeichnet, dass** das Profil (4) einen Reibungskoeffizienten aufweist, der kleiner ist als der Reibungskoeffizient der Schiene (2), wodurch eine Verringerung der Kräfte möglich wird, die auf den Schlitten (3) aufzubringen sind, um diesen entlang der Schiene (2) zu verfahren.

12. Vorrichtung zum gleitenden Verfahren eines Schlittens auf mindestens einer Schiene nach einem der Ansprüche 5 bis 11, **dadurch gekennzeichnet, dass** das Profil (4) aus Acetal besteht.

13. Vorrichtung zum gleitenden Verfahren eines Schlittens auf mindestens einer Schiene nach einem der Ansprüche 5 bis 11, **dadurch gekennzeichnet, dass** die Schiene (2) aus Polypropylen besteht.

## Claims

1. Method for improving the sliding of a slider or carriage on at least one rail, the carriage (3) carrying a part intended to be displaced along the rail (2), **characterised in that** it includes a step for the arrangement, on the surface of the rail (2) on which the carriage (3) is displaced, of a section (4) with a shape that is complementary to the shape of the rail (2), the section (4) substantially conforming in shape to the rail (2) and being made integral with the rail (2), and the section ensuring the smoothing of any irregularities or deformations of the rail (2) arising particularly from thermal expansion of the latter.

2. Method for the sliding of a carriage on at least one rail according to Claim 1, **characterised in that** the section (4) is engaged on the rail (2) in a direction parallel to the direction of the rail (2).

3. Method for the sliding of a carriage on at least one rail according to Claim 1 or 2, **characterised in that** the section (4) is clipped on to the rail (2) in a direction perpendicular to the direction of the rail (2).

4. Method for the sliding of a carriage on at least one rail according to any one of Claims 1 to 3, **characterised in that** the section (4) is made integral with the rail (2) in a removable manner in the proximity of one of its ends, permitting longitudinal expansion of the section (4) along the rail (2) without affecting the shape or any curvature of the section (4).

5. Sliding device for a carriage (3) on at least one rail (2), implemented by the method according to any one of the preceding claims, **characterised in that** it is constituted by a section (4) fixed on the surface of the rail (2) on which the carriage (3) is displaced, the section (4) having a shape that is complementary to the shape of the rail (2) and substantially conforming in shape to the latter.

6. Sliding device for a carriage on at least one rail according to Claim 5, **characterised in that** the section (4) is made integral with the rail (2) in a removable manner, in the proximity of at least one of its ends.

7. Sliding device for a carriage on at least one rail according to Claim 5 or 6, **characterised in that** the section (4) is engaged on the rail (2) in a direction parallel to the direction of the rail (2).

8. Sliding device for a carriage on at least one rail according to any one of Claims 5 to 7, **characterised in that** the section (4) is constituted by plastic material.

9. Sliding device for a carriage on at least one rail according to any one of Claims 5 to 8, **characterised in that** a section (4) is arranged on the rail(s) (2) of a window-winder cassette (1) of a vehicle door.

10. Sliding device for a carriage on at least one rail according to any one of Claims 5 to 8, **characterised in that** a section (4) is arranged on the rail(s) (2) of a window-winder system of a vehicle door.

11. Sliding device for a carriage on at least one rail according to any one of Claims 5 to 10, **characterised in that** the section (4) has a coefficient of friction below the coefficient of friction of the rail (2) making it possible to reduce the efforts to be applied to the carriage (3) in order to displace the latter along the rail (2).

12. Sliding device for a carriage on at least one rail according to any one of Claims 5 to 11, **characterised in that** the section (4) is constituted by acetal.

13. Sliding device for a carriage on at least one rail according to any one of Claims 5 to 11, **characterised in that** the rail (2) is constituted by polypropylene.
